# DEMANDE DE BREVET EUROPEEN

(11) **EP 0 784 219 A1**
(43) Date de publication de la demande: **16.07.1997**
(21) Numéro de dépôt: 96810021.4
(22) Date de dépôt: 10.01.1996
(51) Int. Cl.: G02B 6/38

(54) **Ferrule pour connecteurs optiques**

(71) Demandeur: R. AUDEMARS SA, 6814 Cadempino (CH)
(72) Inventeur: Oggian, Sileno, CH-6930 Bedano (CH); Freiermuth, Rudolf, CH-4710 Balsthal (CH)
(74) Mandataire: AMMANN PATENTANWAELTE AG BERN

(57) **Abrégé**

Une ferrule pour connecteurs, notamment pour connecteurs de fibres optiques, comprend un corps (1), traversé d'un trou permettant de recevoir une fibre optique. Le corps (1) présente une partie de guidage (2) de la fibre, où le pourtour de la section droite du trou forme une ligne (3) fermée et non circulaire, qui entoure et touche un cercle (4) dont le diamètre dépend du diamètre de la fibre. La forme du corps (1) facilite la production de la ferrule et améliore le maintien de la fibre dans la ferrule.

## Description

La présente invention concerne une ferrule pour connecteurs, notamment pour connecteurs de fibres optiques, selon le préambule de la revendication 1.

Un tel dispositif est connu. La connexion réversible de fibres optiques, utilisées pour la transmission de signaux lumineux, se fait par l'intermédiaire de connecteurs de divers types. L'alignement parfait des deux extrémités de fibre à connecter est l'objectif omniprésent lors de la réalisation de connecteurs pour fibres optiques. La pièce mécanique dont le résultat de la connexion dépend le plus, et qui réduit la perte d'intensité du signal au minimum, est la ferrule (ou "virole").

Essentiellement, la ferrule est un corps cylindroïde dont le diamètre peut varier de 1,3 mm à 3,17 mm, et la longueur de 3 mm à 16 mm, selon le type de connecteur envisagé. La ferrule doit avoir un trou, qui la traverse dans le sens de la longueur, de façon à pouvoir recevoir la fibre optique qui vient normalement s'y coller. Le diamètre des trous des ferrules peut varier de 0,124 mm à 0,150 mm, selon le type de fibre auquel elles sont destinées. Au moment de l'assemblage, le jeu entre le trou de la ferrule et la fibre optique doit être aussi petit que possible, pour éviter les erreurs d'alignement qui entraîneraient des pertes d'intensité du signal lumineux; les valeurs usuelles de ce jeu sont inférieures à 1 µm pour les connexions monomodales et inférieures à 3 - 4 µm pour les connexions multimodales.

La position du trou capillaire est très importante aussi pour les résultats que l'on peut obtenir, dans la mesure où les deux ferrules où se placent les deux extrémités de fibre à connecter sont alignées de façon mécanique au moyen d'une douille élastique appelée "sleeve" (manchon), qui aligne les deux ferrules, en agissant sur leur diamètre externe. L'écart de concentricité entre l'axe du trou capillaire et l'axe de la ferrule elle-même doit être aussi réduit que possible, idéalement inférieur à 1 - 1,4 µm pour les connexions monomodales et inférieur à 3 - 4 µm pour les connexions multimodales.

D'autres caractéristiques de la ferrule peuvent influencer la qualité de la connexion, à savoir la stabilité (thermique, chimique ou mécanique) du matériau utilisé et le degré de finition superficielle, plus particulièrement de la surface de contact de la ferrule ainsi que du diamètre extérieur.

Bien qu'il existe divers types de connecteurs sur le marché, les connecteurs les plus utilisés sont ceux qui ont une ferrule de type monobloc en céramique (oxyde de zirconium ZrO₂). Ce matériau permet d'obtenir des bonnes performances en matière de stabilité du matériau, et un degré de finition superficielle optimal, pratiquement spéculaire, que l'on obtient grâce à des techniques de polissage particulières. Le matériau utilisé pour la production de ferrules en céramique est un "brut" fritté dont la forme dépend de la technique utilisée pour la "mise en forme" du corps avant le traitement par frittage. Il existe deux méthodes de fabrication principales: extrusion et moulage par injection.

L'extrusion permet d'obtenir des barres cylindriques circulaires avec un trou capillaire. Il n'est pas possible d'obtenir des formes plus complexes. La dureté du matériau utilisé ne permet pas d'enlever du matériau, sauf par des techniques de rectification, avec des meules abrasives diamantées ou par polissage, toujours avec des abrasifs à base de diamant. Il est donc important de pouvoir éviter ces opérations coûteuses, tant en raison du type d'outillage utilisé que de la lenteur avec laquelle elles peuvent être effectuées sans endommager la pièce usinée et l'outil.

Le moulage par injection permet d'obtenir des formes plus complexes et donc un "brut" plus proche du produit fini, par l'intégration des formes nécessaires à la ferrule finie. Le problème majeur de cette technique est la possibilité de gérer, à l'intérieur de la matrice, le filament qui doit donner la forme au trou capillaire. La pression exercée par le flux de matériau fondu entraîne inévitablement une courbure du filament et un déplacement de son axe par rapport au creux qui façonne le diamètre extérieur de la ferrule. Il en résulte que les meilleures valeurs de concentricité pouvant être obtenues actuellement en fabrication industrielle, sont de 20 - 40 µm. Ce facteur implique que, pour atteindre les valeurs requises pour le produit fini, il faut des opérations de rectification qui enlèvent du matériau sur le diamètre extérieur, de diverses façons, avec effet mécanique sur le trou capillaire. Pour y parvenir, il faut que le trou traverse la ferrule sur toute la longueur avec un diamètre constant.

La longueur du trou de la ferrule est un paramètre qui peut influencer les performances du connecteur. La longueur qui doit guider la fibre dans la ferrule ne doit pas être inférieure à 1,5 mm et ce, pour éviter un désalignement angulaire de la fibre par rapport à la ferrule. La longueur du trou de guidage de la ferrule, actuellement de 10 mm environ, se révèle largement exagérée, pour ce qui est de la fonctionnalité du connecteur. Elle est due à des aspects de la méthode de production de la ferrule.

Le but de l'invention est de réaliser une ferrule, dont la fabrication est facile et peu coûteuse, et qui assure une connexion sûre.

L'objectif est atteint grâce aux moyens définis dans la revendication 1. D'une part, le profil de la partie de guidage de la fibre permet, dans la fabrication de la ferrule, l'utilisation d'un noyau de matrice renforcé, ce qui assure une réduction importante des opérations de rectification nécessaires, améliore la concentricité du trou par rapport au diamètre externe, et facilite le lavage du trou, tout en assurant le guidage exact de la fibre. D'autre part, la ferrule selon l'invention diminue les difficultés d'insertion de la fibre, augmentant ainsi les possibilités d'automatisation du processus, et crée un espace dans lequel l'excès de colle peut se déposer, trouvant une surface de contact accrue, ce qui améliore le maintien de la fibre dans son assise.

Les moyens définis dans les revendications dépendantes permettent, quant à eux, de réaliser l'invention selon des exécutions préférées.

Maintenant, une forme d'exécution du dispositif selon l'invention sera décrite à titre d'exemple non limitatif, à l'appui des dessins annexés dans lesquels
- la Fig. 1: est une coupe partielle longitudinale de la ferrule,
- la Fig. 2: est une coupe selon le plan A - A de la Fig. 1,
- la Fig. 3: est une vue en coupe agrandie de la partie centrale de la ferrule et
- la Fig. 4: est une coupe selon le plan B - B de la Fig. 3.

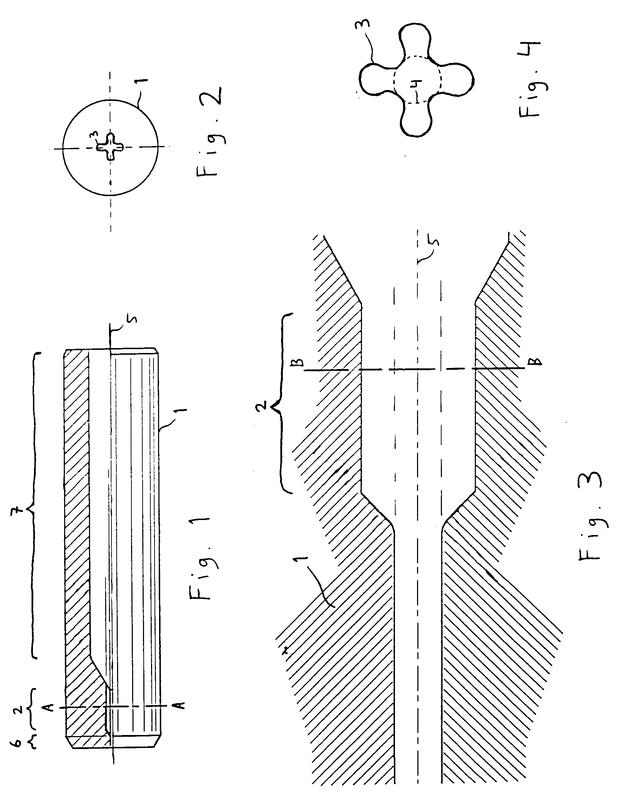

La Figure 1 représente une vue en coupe partielle de la ferrule pour connecteurs selon l'invention et la Figure 2 est une coupe selon le plan A - A de la Figure 1. La ferrule comprend un corps 1, qui est essentiellement cylindrique ou prismatique, et qui est traversé de part en part d'un trou permettant de recevoir une fibre optique. Le corps 1 est donc tubulaire. La section droite du trou n'est pas circulaire sur toute la longueur du corps 1. Ce dernier présente une partie de guidage 2 pour la fibre. Cette partie 2 est façonnée de telle sorte que le pourtour de la section droite du trou (voir la Fig. 2) forme une ligne 3 fermée et non circulaire, qui entoure et touche (voir la Fig. 4) un cercle virtuel 4 dont le diamètre est fonction du diamètre de la fibre. Dans l'exemple illustré, la ligne 3 est une courbe fermée s'étendant autour de l'axe du trou avec un rayon variant, dont la valeur ne descend jamais en dessous d'une valeur minima dépendante du rayon de la fibre. Le rayon de la fibre envisagée étant donné, cette valeur minima (qui est la moitié du diamètre du cercle 4) correspond à la valeur du rayon de la fibre plus une valeur de jeu, lequel jeu est nécessaire pour pouvoir introduire la fibre dans la ferrule. A titre d'exemple, pour une fibre d'une épaisseur de 0,127 mm, cette valeur de jeu est de l'ordre de + 0,004 mm.

Par section droite du trou on entend la section de ce trou par un plan perpendiculaire à son axe 5. Cet axe 5 du trou constitue un axe de symétrie du corps 1. Le pourtour de la section droite du trou peut être une ligne fermée ou un tracé fermé quelconque, qui contourne et touche le cercle 4 au moins une fois en un point ou en une portion de ligne. De préférence, la ligne 3 limitant la section droite du trou dans la partie de guidage 2 touche le cercle 4 déterminé par la fibre au moins trois fois de sorte à assurer chaque fois un point de contact ou une portion de ligne (ou "zone") de contact pour la fibre (les points ou les zones de contact étant interrompu(e)s, c'est-à-dire séparé(e)s par des zones sans contact). Chaque point de contact fait partie d'une ligne longitudinale de contact (qui est aussi une génératrice du trou, dans le cas où le trou est prismatique ou cylindrique, non circulaire). A l'assemblage de la fibre, celle-ci est collée dans la ferrule, la colle se déposant dans la zone de jeu autour de la fibre et dans les espaces créés par la forme du trou (qui est, par exemple, prismatique ou cylindrique, non circulaire; dans ce cas-là, la ligne 3 est la directrice). Ainsi, le guidage exact de la fibre dans la ferrule est-il garanti.

La Figure 3 montre une vue en coupe agrandie de la partie centrale de la ferrule et la Figure 4 est une coupe selon le plan B - B de la Fig. 3 (qui correspond au plan A - A de la Fig. 1). Dans l'exemple illustré, le corps 1 est façonné de sorte que la section droite du trou dans la partie de guidage 2 a la forme d'un quatre-feuilles. Cette forme de construction s'est avérée avantageuse en ce qui concerne la précision de fabrication de la ferrule, la facilité d'assemblage de la fibre, et le maintien sûr et fiable de la fibre dans la ferrule.

Le corps 1 présente une partie de guidage additionnelle 6 de la fibre, où la section droite du trou est circulaire. Le diamètre de la section circulaire dans cette partie de guidage additionnelle 6 correspond au diamètre dudit cercle 4 déterminé par la fibre dans la partie de guidage 2 (c'est-à-dire le diamètre nominal désiré pour un trou de ferrule: le diamètre de la fibre plus jeu). Selon l'exemple, la partie de guidage additionnelle 6 guide la fibre sur une longueur de 0,3 mm, tandis que la partie de guidage 2 guide la fibre sur une longueur d'environ 1,3 mm, la partie de guidage 2 et la partie de guidage additionnelle 6 ayant une longueur totale d'environ 1,6 mm. Cette longueur de guidage suffit pour éviter un désalignement angulaire de la fibre par rapport à la ferrule. La ferrule selon l'invention a donc une longueur du trou de guidage de la fibre, qui est réduite au minimum.

Le corps 1 présente une troisième partie 7, où la section droite du trou est circulaire avec un diamètre supérieur au diamètre maximum dans la partie de guidage 2. La longueur de guidage des deux parties de guidage 2, 6 étant suffisante, cette troisième partie 7 ne sert pas à guider la fibre, ce qui facilite l'assemblage.

Le "brut" de la ferrule, c'est-à-dire la pièce originelle en tant que telle, est réalisée par moulage par injection et ne nécessite ni enlèvement de matériau pour obtenir le diamètre du trou, ni rectification du diamètre externe de la ferrule, ce qui écarte tout effet mécanique négatif, non souhaité, sur le diamètre interne. Le noyau de la matrice utilisée, qui est soumis à fléchissement par le flux de matériau fondu, peut être renforcé grâce au profil de la partie de guidage 2 et de la troisième partie 7. De préférence, la ferrule est réalisée dans la céramique CIM (Ceramic Injection Moulding), dans le métal MIM (Metal Injection Moulding) ou dans les matériaux thermoplastiques.

Les conditions de mesure du trou capillaire ainsi que de la concentricité du trou par rapport au diamètre externe sont améliorées. Aussi les opérations de lavage, pour assurer la propreté du trou capillaire et éviter son obstruction, sont sensiblement facilitées.

## Revendications

1. Ferrule pour connecteurs, notamment pour connecteurs de fibres optiques, comprenant un corps (1), traversé d'un trou permettant de recevoir une fibre optique, **caractérisée en ce que** le corps (1) présente une partie de guidage (2) de la fibre, laquelle partie (2) est façonnée de telle sorte que le pourtour de la section droite du trou forme une ligne fermée et non circulaire (3), entourant et touchant au moins une fois un cercle virtuel (4) dont le diamètre est fonction du diamètre de la fibre.

2. Ferrule selon la revendication 1, **caractérisée en ce que** dans la partie de guidage (2), la ligne (3) limitant la section droite du trou touche ledit cercle (4) déterminé par la fibre au moins trois fois, de sorte à assurer chaque fois un point de contact pour la fibre.

3. Ferrule selon la revendication 1 ou 2, **caractérisée en ce que** dans la partie de guidage (2), la section droite du trou a la forme d un quatre-feuilles.

4. Ferrule selon l'une des revendications 1 à 3, **caractérisée en ce que** l'axe du trou constitue un axe (5) de symétrie du corps (1).

5. Ferrule selon l'une des revendications 1 à 4, **caractérisée en ce que** le corps (1) présente une partie de guidage additionnelle (6) de la fibre, où la section droite du trou est circulaire.

6. Ferrule selon la revendication 5, **caractérisée en ce que** le diamètre de la section circulaire dans la partie de guidage additionnelle (6) correspond au diamètre dudit cercle (4) déterminé par la fibre dans la partie de guidage (2).

7. Ferrule selon l'une des revendications 5 et 6, **caractérisée en ce que** la partie de guidage (2) et la partie de guidage additionnelle (6) ont une longueur totale d'environ 1,6 mm.

8. Ferrule selon l'une des revendications 1 à 7, **caractérisée en ce que** le corps (1) présente une troisième partie (7), où la section droite du trou est circulaire avec un diamètre supérieur au diamètre maximum dans la partie de guidage (2).

9. Ferrule selon l'une des revendications 1 à 8, **caractérisée en ce qu**'elle est réalisée par moulage par injection.

10. Ferrule selon l'une des revendications 1 à 9, **caractérisée en ce qu**'elle est réalisée dans la céramique CIM (Ceramic Injection Moulding), dans le métal MIM (Metal Injection Moulding) ou dans les matériaux thermoplastiques.
